# EUROPEAN PATENT SPECIFICATION

(11) **EP 2 832 260 B1**
(45) Date of publication and mention of the grant of the patent: **04.01.2017**
(21) Application number: 14382292.2
(22) Date of filing: 29.07.2014
(51) Int. Cl.: A47B 13/02, F16B 12/40, F16B 12/52, A47B 13/06, F16B 7/18

(54) **Table**
Tisch
Table

(30) Priority: 02.08.2013 ES 201330963 U
(43) Date of publication of application: 04.02.2015
(73) Proprietor: Muebles Romero, S.A., 46309 Ribarroja del Turia (Valencia) (ES)
(72) Inventor: Romero Sorli, Jose, 46309 Ribarroja del Turia (Valencia) (ES)
(74) Representative: Carpintero Lopez, Francisco

(56) References cited:
- EP-A2- 0 085 452
- FR-A- 1 373 271
- US-A- 1 372 061
- US-A- 2 323 829
- US-A- 2 843 435
- US-A- 2 858 153
- US-A1- 2002 090 256

## Description

### Technical Field of the Invention

The present invention corresponds to the technical field of furniture, particularly to the type of furniture such as tables in the hotel and restaurant business, having a frame formed from connecting crosspieces between their legs, and furthermore having some type of fixing system for fixing the tabletop thereof, this system also being formed by at least one crosspiece.

Said types of fixing systems comprise, among others, those systems that allow stabilizing the tabletop when the general frame of the table tends to wobble due to different circumstances.

### Background of the Invention

A type of tables, the frame of which is formed by means of tubes or crosspieces, connecting the legs of the tables, is widely used today, primarily in the hotel and restaurant business.

These tables can have a fixing system for fixing the tabletop at a desired height, or for stabilizing it, helping to level it regardless of the irregularities of the ground on which it is supported.

Some systems for stabilizing these tabletops are known in the state of the art, and these systems seek to horizontally stabilize the tabletop, usually by applying a small force on one of the sides thereof, in response to a ground with a certain inclination, in response to minor unevenness or a somewhat irregular support surface.

Reference documents WO2011107677, WO0069312 and FR2902620 can be mentioned as examples of the state of the art.

The first reference document WO2011107677 consists of a removable hinged system forming a base of a table with four legs and a tray suitable for being automatically stabilized on irregular ground without needing to be calibrated, which is made up of four identical elements connected to one another by means of hinges on an intermediate part to form an independent assembly. This intermediate part is symmetrical along a central vertical axis and completely removable by means of four screws.

This first system is valid for two types of table, metal tables and preferably wood tables.

Reference document WO0069312 consists of a self-stabilizing support assembly for articles such as bases, tables, load bearing structures, pedestals, rolling chassis for furniture,... having a plurality of support members providing four contact points with a reference surface. These contact members are constrained by a mechanical connection such that rotation of the line connecting adjacent contact points is accompanied by rotation of the line connecting the other adjacent contact points in the opposite direction.

Reference document FR2902620 consists of a table having a hinged mechanism located between the tabletop and the legs. This mechanism is formed by parallelograms on opposite sides, hinged in the center thereof in a vertical plane on the supports, connected to the top part of the table and connected to one another by means of two transverse parts or two parallelograms. The parts are hinged in the center thereof on the supports to form a square or rectangle. The legs of the table are fixed to the connecting parts or the transverse parts and the hinged parallelograms are formed by associating rigid bars.

All these systems seek to stabilize the tabletop or the top of the piece of furniture on four supports, regardless of the support surface.

All these documents present a drawback in practice when connecting the different parts forming the frame of the tables that makes these systems less efficient.

The tubes forming the frame of the tables, regardless of the material they are made of, whether wood or metal, although particularly in the case of metal tubes, present a problem with the connections because since the walls thereof have smaller dimensions, it is hard to put a screw in and for said screw to stay in place with suitable pressure to prevent it from coming loose with use.

Therefore, if the fixing pressure is high, it is very easy for the tube to deform, weakening same, whereas if the fixing pressure is low to prevent the tube from deforming, with use such pressure drops, the functionality of the tables and therefore the stabilizing function thereof in response to irregular surfaces being lost.

In tables manufactured with metal tubes, and more particularly with aluminum, the problem is even worse given how weak the material is. Threading on aluminum lasts for a very short while because in just a short time, the connection develops play, so these systems lose efficiency in this case.

US 2 843 435A discloses a table according to the state of the art.

### Description of the Invention

The connecting device for connecting crosspieces of the frame of a table, of the type comprising at least four legs, at least four upper crosspieces connecting contiguous legs, having a first hole at an intermediate point and a second hole at the ends thereof, a tabletop and a fixing system for fixing same, also formed by at least one central crosspiece with a third hole at the point of connection with the upper crosspieces presented herein, comprises a fixing bolt element for fixing each upper crosspiece and the at least one corresponding central crosspiece, the resulting fixing points located in the first hole of each upper crosspiece being a pivot point the axis of which coincides with said fixing bolt element.

This fixing bolt element is a longitudinal element having a first end and second end, with a first stop element abutting with the surface of the upper crosspiece at said first end, a second stop element between the upper crosspiece and the central crosspiece and clamping means.

The face of the first stop element contacting with the upper crosspiece comprises adaptation means for adapting to the outer surface thereof.

The second stop element also has a first face with first adaptation means for adapting to the outer surface of the upper crosspiece and a second face opposite the first face with second adaptation means for adapting to the outer surface of the central crosspiece.

The device likewise comprises an angle bracket for connecting adjacent upper crosspieces at the point where they come together, formed by two orthogonal sides each having a longitudinal through hole, and respective connecting elements for connecting each angle bracket with the corresponding upper crosspieces in the second hole thereof, comprising a third stop element between each upper crosspiece and the angle bracket, and clamping means.

The fixing bolt element can comprise a thread at its second end, and said bolt element and the first stop element can be two independent parts, or in contrast, be integrally connected forming a single body.

If two independent bodies are formed, the fixing bolt element furthermore has a reinforcement element for reinforcing the connection of said bolt element with the upper crosspiece.

Said reinforcement element has a hollow cylindrical section with a first end and second end, with an outer diameter equal to or less than the diameter of the first hole of the upper crosspiece, and with an inner diameter equal to or greater than the diameter of the bolt element, such that it is located inside the first hole of the upper crosspiece, allowing and adjusting the passage of the fixing bolt element therethrough.

A flange is provided at the first end of the reinforcement element around its perimeter, whereas the inner surface of the second end can comprise a thread for being coupled to the thread of the fixing bolt element when the latter passes therethrough, where said bolt element has said thread.

The angle bracket for connecting adjacent upper crosspieces comprises an intermediate face between the two sides of the right angle. This intermediate face is orthogonal to the bisecting line of the angle such that the bracket has two obtuse angles each formed by one of the sides and said intermediate face, respectively.

The connecting elements for connecting said angle bracket and the upper crosspieces comprise a first end having an outer diameter equal to or less than the diameter of the second hole of these crosspieces and a second end with an outer thread.

In turn, said first end of the connecting elements can have a smooth outer surface, in which case these connecting elements comprise a fourth stop element immobilizing said connecting element in the inner wall of the crosspiece, or it can have a thread.

In addition to the connecting device for connecting crosspieces, this specification also discloses a frame of a table with a connecting device for connecting crosspieces such as that explained above.

The upper crosspieces in this frame of a table can have a circular, square or rectangular section, and the at least one central crosspiece forming the fixing system for fixing the tabletop can likewise have a circular, square or rectangular section.

When the upper crosspieces have a square or rectangular section and the first stop element is also integrally connected to the first end of the fixing bolt element, regardless of the section of the at least one central crosspiece, the adaptation means of the first stop element for adapting to the outer surface of the upper crosspiece comprise a planar surface with a prolongation perpendicular thereto, in at least one of its upper or lower ends.

On the other hand, when the upper crosspieces have a circular section, the flange of the reinforcement element for reinforcing the connection of the upper crosspiece and the second stop element is housed in the inner surface of said second stop element.

This frame of a table can comprise a safety element coupled to the upper face of the upper crosspieces thereof.

The material from which this frame of a table is formed can be wood or any metal, preferably aluminum or any combination thereof.

Said combinations of materials can be applied both to the crosspieces and to the legs forming the frame of the table.

When the frame of the table is formed by a metal, a protective cap may be provided at the free ends of said crosspieces.

A significant improvement over the state of the art is achieved with the connecting device for connecting crosspieces of the frame of a table and the frame of a table with said device herein proposed.

This is because a connecting system protecting the tubes in the spot where the connection is made has been designed. Therefore, on one hand deformation of the tubes at said points of connection are prevented, and on the other hand, the fixing pressure is assured as being the suitable fixing pressure.

Since one type of fittings or another is proposed depending on the section of the crosspieces, optimal protection is achieved for all cases as a result of not applying the connection force on the crosspieces but rather on the connecting elements connecting the crosspieces. Therefore, the connections are also efficient, regardless of the material from which the frame of the table is made, and specifically for aluminum, which was a problematic material in the state of the art.

The devices of the present invention are therefore applicable for crosspieces connecting the legs of the table and further comprise any fixing system for fixing the tabletop thereof, this system also being formed by at least one crosspiece.

Nevertheless, said connecting devices are preferably particularly applied in those cases in which the legs are supported in a defective manner on soft, irregular or uneven surfaces or on surfaces with cavities causing the general frame of the table to be sunken lower or to wobble, or even on regular surfaces in which the length of the legs is uneven, ultimately requiring stabilization.

### Brief Description of the Drawings

For the purpose of aiding to better understand the features of the invention according to a preferred practical embodiment thereof, a set of drawings is attached as an integral part of said description in which the following is depicted with an illustrative and non-limiting character:
Figure 1 shows a perspective view of a table with the tabletop of a first preferred embodiment of the invention.
Figure 2 shows a perspective view of the frame of the table of a first preferred embodiment of the invention.
Figure 3 shows a detailed view of the connection of an upper crosspiece of the table with a central crosspiece for a first preferred embodiment of the invention.
Figure 4 shows an exploded view of the connection between an upper crosspiece and the central crosspiece and of the connection between adjacent upper crosspieces for the first embodiment of the invention.
Figure 5 shows a cross-section view of the point of connection between an upper crosspiece and the central crosspiece for the first preferred embodiment of the invention.
Figure 6 shows a perspective view of an angle bracket for connecting adjacent upper crosspieces.
Figure 7 shows a plan, elevational and profile view of the angle bracket for connecting adjacent upper crosspieces.
Figures 8.1 and 8.2 show a perspective view of a first stop element and a second stop element, respectively, for the first preferred embodiment of the invention.
Figure 9 shows a detailed view of the connection of an upper crosspiece of the table with a central crosspiece for a second preferred embodiment of the invention.
Figure 10 shows an exploded view of the elements for connecting an upper crosspiece of the table with a central crosspiece for a second preferred embodiment of the invention.
Figure 11 shows a perspective view of the connection of two adjacent upper crosspieces of the table for a second preferred embodiment of the invention.
Figure 12 shows an exploded view of the connection between adjacent upper crosspieces in one of the crosspieces for the second preferred embodiment of the invention.
Figure 13 shows a section of the connection between the angle bracket and one of the adjacent upper crosspieces for the second preferred embodiment of the invention.

### Detailed Description of a Preferred Embodiment of the Invention

In view of the drawings, it can be seen how in a first preferred embodiment of the invention the connecting device for connecting crosspieces of the frame of a table 1, of the type comprising four legs 10, four upper crosspieces 2 connecting contiguous legs 10, having a first hole 11 at an intermediate point and a second hole 12 at the ends thereof, a tabletop 13 and a fixing system for fixing same formed by a central crosspiece 3 having a circular section, with a third hole at the point of connection with each of the upper crosspieces 2 herein proposed, comprises a fixing bolt element 4 for fixing each upper crosspiece 2 and the central crosspiece 3, and an angle bracket 5 for connecting adjacent upper crosspieces 2 at the point where they come together.

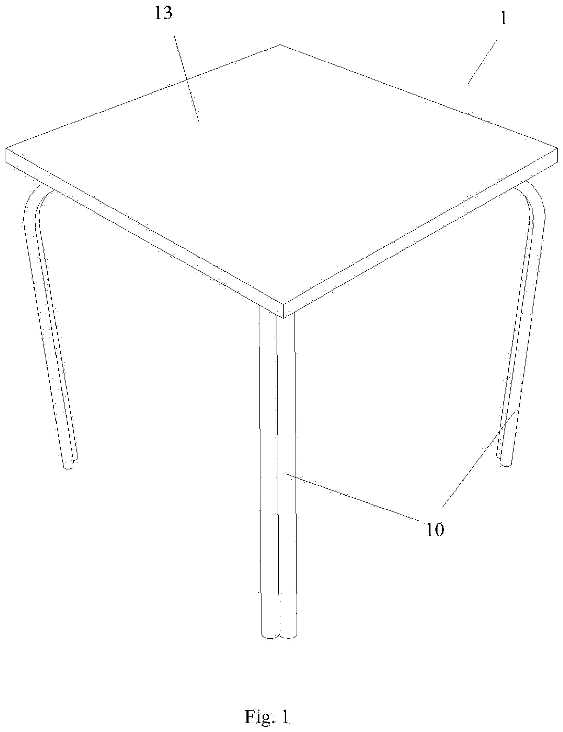

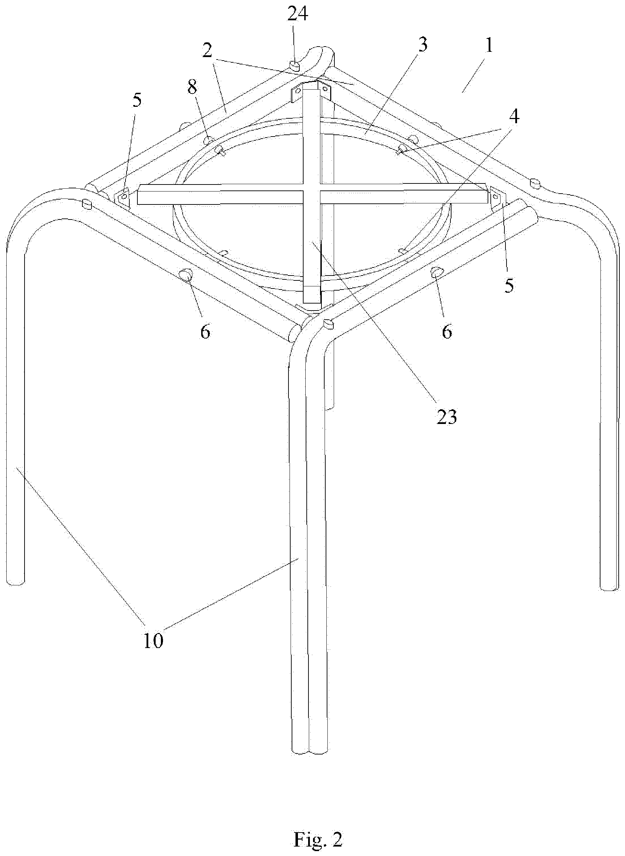

As can be seen in Figures 1 and 2, the frame of the table 1 of this first embodiment of the invention has double-tube upper crosspieces 2 having a circular section, whereas the central crosspiece 3 has a square section.

The fixing points between the upper crosspieces 2 and the central crosspiece 3 are located in the first hole 11 of each of said upper crosspieces 2 and are a pivot point the axis of which coincides with the fixing bolt element 4.

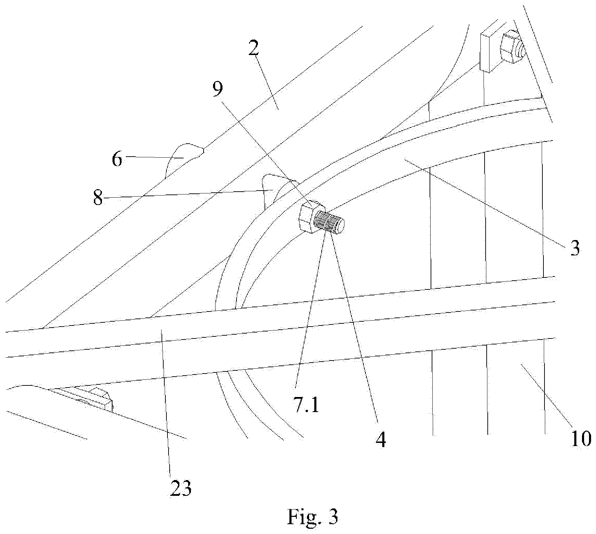

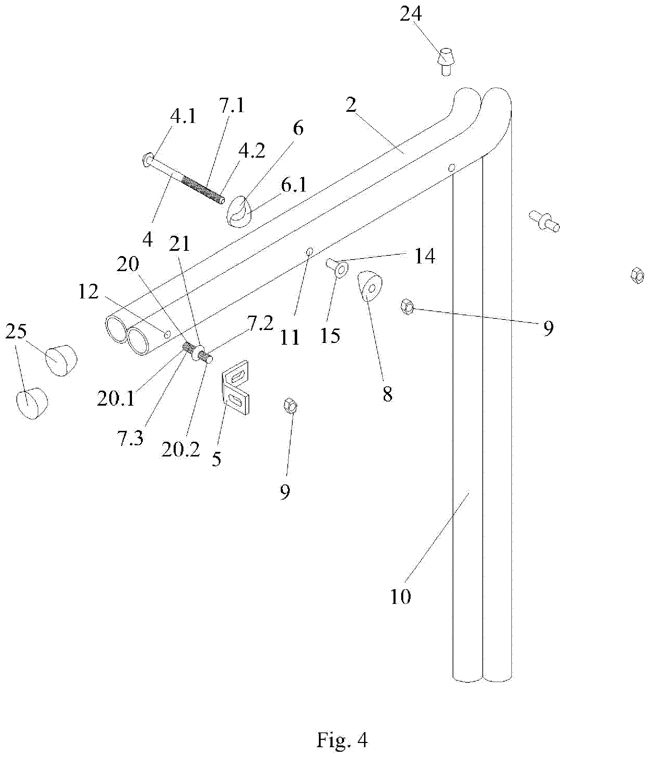

Figures 3 and 4 show the connection of one of the upper crosspieces 2 of this first preferred embodiment of the invention with the central crosspiece 3, said connection being formed by said fixing bolt element 4 which is a longitudinal element with a first end 4.1 and a second end 4.2.

The first end 4.1 of said bolt element 4 has a first stop element 6 abutting with the surface of the upper crosspiece 2, and the second end 4.2 has a thread 7.1. Said fixing bolt element 4 and the first stop element 6 are two independent elements.

It in turn has a second stop element 8 between the upper crosspiece 2 and the central crosspiece 3 and clamping means 9 consisting of a nut.

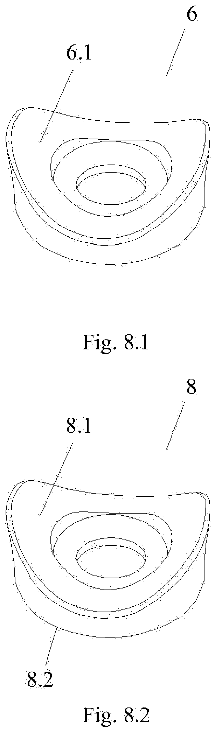

Figure 8.1 shows the part forming the first stop element 6 which has adaptation means 6.1 for adapting to the outer surface of the upper crosspiece 2, on the face contacting same.

In this first embodiment of the invention, the second stop element 8, shown in Figure 8.2, is a part that is identical to the part forming the first stop element 6. This second stop element 8 has a first face with first adaptation means 8.1 for adapting to the surface of the upper crosspiece 2 and a second face opposite the first face with second adaptation means 8.2 for adapting to the outer surface of the central crosspiece 3.

Furthermore, since the fixing bolt element 4 and the first stop element 6 are two independent parts, this bolt element 4 in turn comprises a reinforcement element 14 to reinforce the fixing of the bolt element 4 to the upper crosspiece 2.

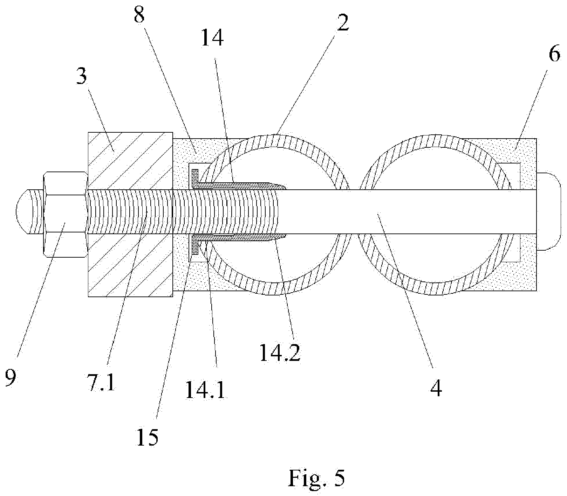

This reinforcement element 14, which can be seen in the cross-section view depicted in Figure 5, has a cylindrical section with a first end 14.1 and a second end 14.2, such that the outer diameter thereof is less than the diameter of the first hole 11 of the upper crosspiece 2, whereas the inner diameter is greater than the diameter of the fixing bolt element 4.

This reinforcement element 14 therefore fits tightly in the first hole 11 of each of the upper crosspieces 2, such that when the fixing bolt element 4 is inserted through said first hole 11, it is inserted through this reinforcement element 14 tightening the connection between both.

Said reinforcement element 14 has a flange 15 around the perimeter of its first end 14.1 and in this first preferred embodiment of the invention, it comprises a thread (not depicted) on the inner surface of the second end 14.2. This thread can be coupled with the thread 7.1 of the fixing bolt element 4, creating a perfect fit between them.

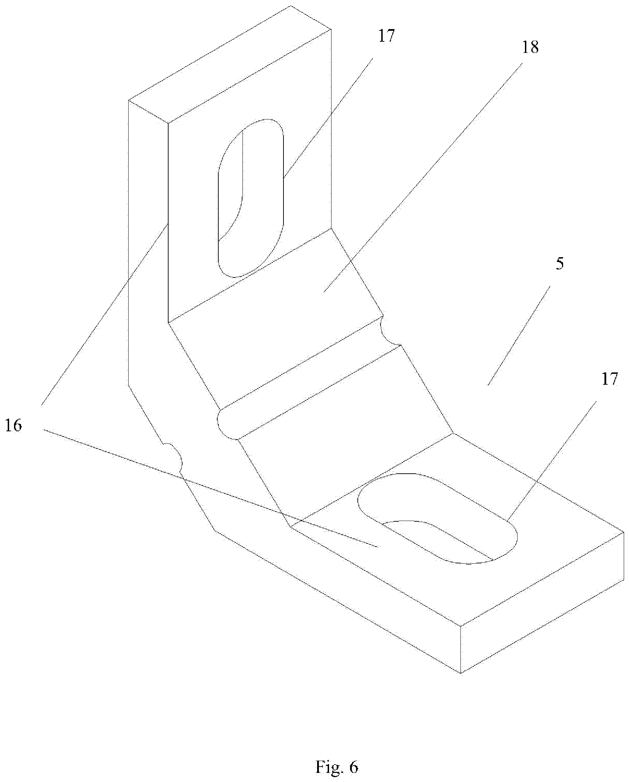

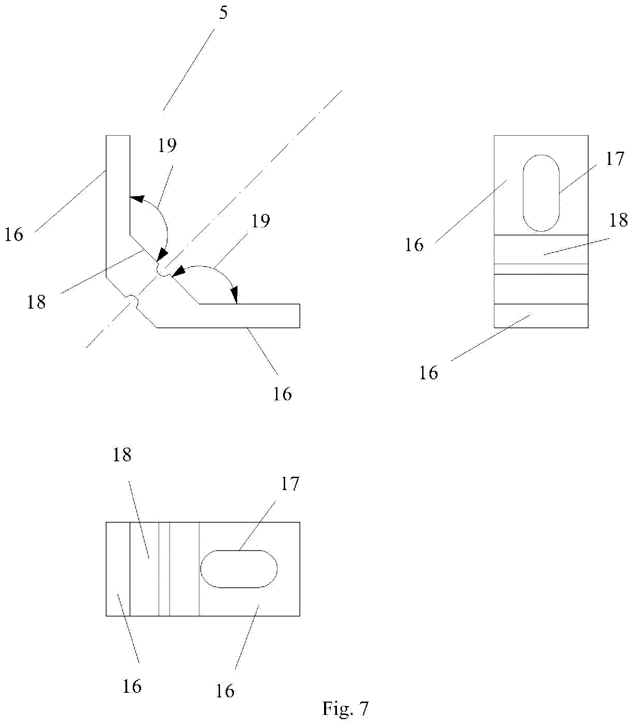

To connect the adjacent upper crosspieces 2 it has already been indicated that a connecting angle bracket 5 is used. This bracket can be seen in Figures 6 and 7, and in the exploded view of the connection between adjacent upper crosspieces 2 depicted in Figure 4.

Said drawings show that this angle bracket 5 is formed by two orthogonal sides 16, each having a longitudinal through hole 17, and an intermediate face 18 between them, such that it is orthogonal to the bisecting line of the right angle formed by the two sides 16. The angle bracket 5 therefore has two obtuse angles 19 each formed by one of the sides 16 of the bracket 5 and the intermediate face 18, respectively.

It has respective connecting elements 20 corresponding with this angle bracket 5 for connecting each side 16 with the respective adjacent upper crosspiece 2 through the second hole 12 of the latter, having a third stop element 21 between each upper crosspiece 2 and the angle bracket 5, in addition to clamping means 9 in each case, as can be seen in Figure 4.

Said connecting elements 20 have a first end 20.1 having an outer diameter less than the diameter of the second hole 12 of the upper crosspieces 2 and a second end 20.2 with an outer thread 7.2.

In this first embodiment of the invention, the outer surface of the first end 20.1 of said connecting elements 20 comprises a thread 7.3.

This specification also describes a frame of a table 1 with a connecting device for connecting crosspieces such as the one defined above.

For this first embodiment of the invention, as previously indicated this frame of a table has double-tube upper crosspieces 2 having a circular section and a fixing system for fixing the tabletop with a single circular central crosspiece 3 having a square section, with a cross brace 23 thereon for raising the tabletop 13, which allows stabilizing movements.

Since the upper crosspieces 2 has a circular section, the flange 15 of the reinforcement element 14 for reinforcing the connection of the bolt element 4 and the upper crosspiece 2 is housed in the inner surface of this second stop element 8.

The frame of a table 1 of this first preferred embodiment of the invention comprises a safety element 24 coupled to the upper face of the upper crosspieces 2 thereof, as shown in Figure 4.

This frame of a table 1 is made with aluminum crosspieces and as can be seen in Figure 4, they have a protective cap 25 at the free ends thereof.

This specification discloses a second preferred embodiment of the invention of a connecting device for connecting crosspieces of the frame of a table 1 similar to that of the first embodiment, this frame being formed by four legs 10, four upper crosspieces 2 connecting contiguous legs 10, with a first hole 11 at an intermediate point and a second hole 12 at the ends thereof, a tabletop 13 and a fixing system in which, in this second case, the upper crosspieces 2 have a square section and the fixing system is formed by a circular central crosspiece 3 also having a square section with a third hole at the point of connection with each of the upper crosspieces 2.

The fixing system also comprises a cross brace 23 thereon for raising the tabletop 13 up from the table 1. A gap between the tabletop 13 and the upper crosspieces 2 allowing the stabilizing movement of said tabletop 13 is therefore assured.

The device of this second preferred embodiment of the invention comprises a fixing bolt element 4 for fixing each upper crosspiece 2 and the central crosspiece 3, located in the first hole 11 of each of the upper crosspieces 2, and where the resulting fixing points are a pivot point of the central crosspiece 2 with axis the fixing bolt element 4.

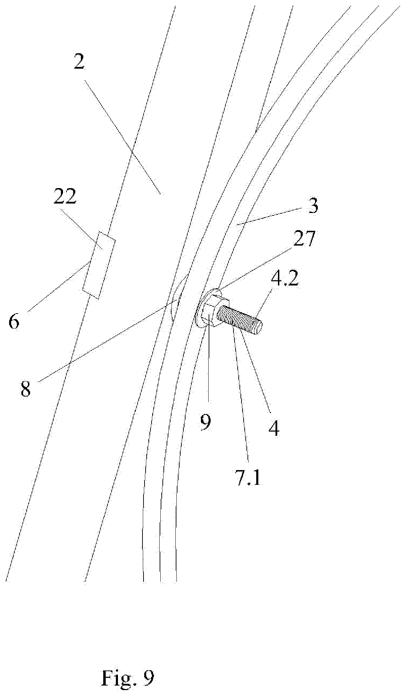

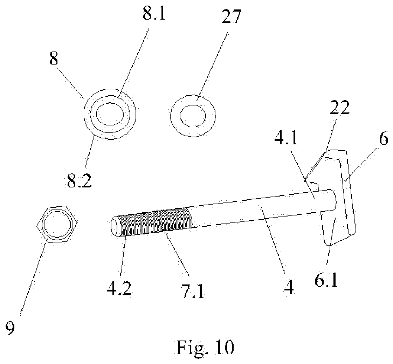

As shown in Figures 9 and 10, this fixing bolt element 4 is formed by a longitudinal element with a first end 4.1 and a second end 4.2, where the second end 4.2 thereof has a thread 7.1.

Figure 10 shows this fixing bolt element 4, having a first stop element 6 abutting with the surface of the upper crosspiece 2 at its first end 4.1, both elements forming a single part as they are integrally connected. A first face of this first stop element 6 contacting with the upper crosspiece has adaptation means 6.1 for adapting to same.

As can be seen in Figures 9 and 10, the second end 4.2 of the fixing bolt element 4 has a second stop element 8 between the upper crosspiece 2 and the central crosspiece 3, having first adaptation means 8.1 for adapting to the surface of the upper crosspiece 2 and second adaptation means 8.2 for adapting to the central crosspiece 3 on the second face, opposite the first.

It further comprises a clamping element 9 formed by a nut along with washer 27.

The connecting device for connecting crosspieces of this second preferred embodiment of the invention in turn comprises an angle bracket 5 for connecting adjacent upper crosspieces 2 at the point where they come together. This angle bracket 5 is similar to that of the first preferred embodiment, shown in Figures 6 and 7, and also has two orthogonal sides 16 each with a longitudinal through hole 17 and an intermediate face 18 between both perpendicular to the bisecting line of the right angle. Finally, the bracket 5 has two obtuse angles 19 formed, respectively, between one of the sides 16 and the intermediate face 18.

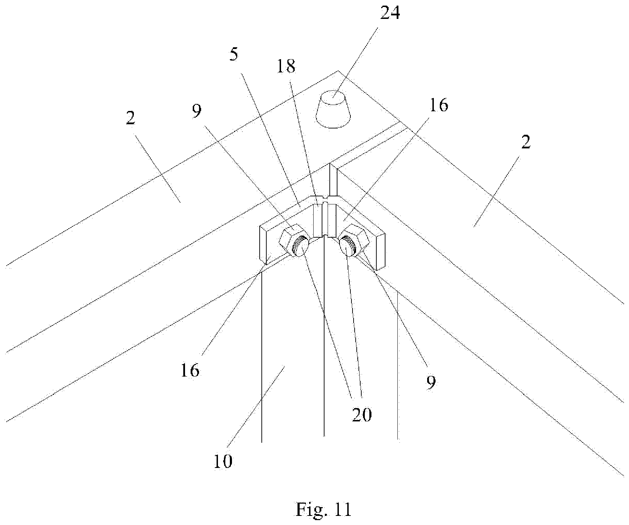

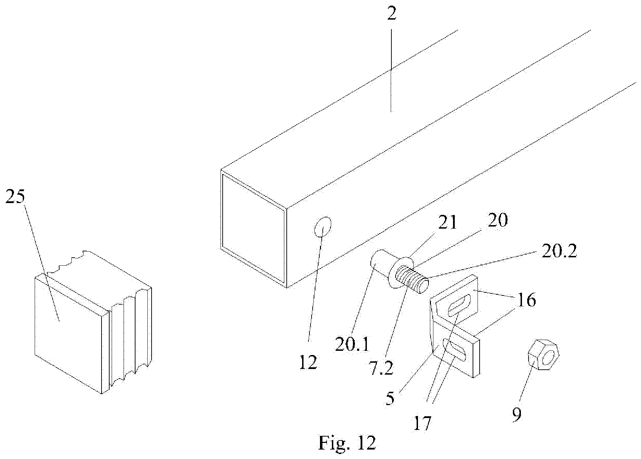

As can be seen in Figures 11 and 12, each angle bracket 5 comprises respective connecting elements 20 for connecting same with the corresponding adjacent upper crosspieces 2, inserted through the second hole 12 of the latter. These connecting elements 20 have a first end 20.1 having an outer diameter less than the diameter of the second hole 12 of the crosspieces so it can be inserted therein and a second end 20.2 with an outer thread 7.2. They further comprise a clamping element 9 formed by a nut and a third stop element 21 between each upper crosspiece 2 and the angle bracket 5.

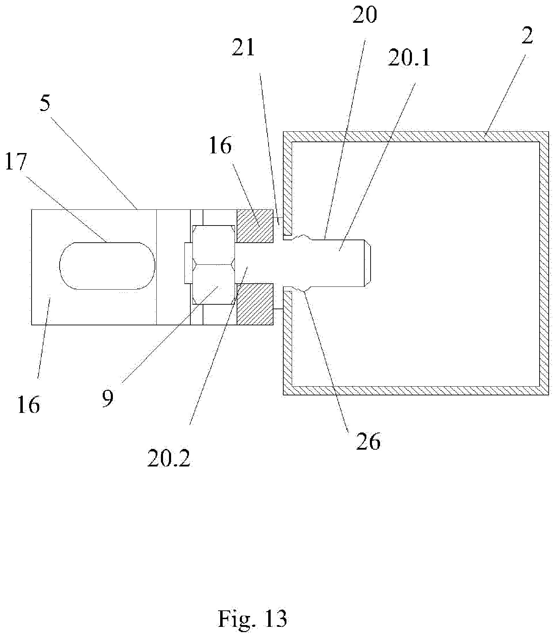

As can be seen in Figure 13, in this second preferred embodiment of the invention the first end 20.1 of the connecting elements 20 has a smooth outer surface, so said first end 20.1 further comprises a fourth stop element 26 that is inside the upper crosspiece 2, preventing the connecting element 20 from coming out of the second hole 12 thereof.

This specification in turn discloses a frame of a table 1 with a device like the one described above. For this second preferred embodiment of the invention, since the frame is formed by upper crosspieces 2 having a square section and by a fixing system for fixing the tabletop with a single circular crosspiece 3 also having a square section, and the first stop element 6 and the first end 4.1 of the fixing bolt element 4 further being integrally connected; as can be seen in Figure 10, the adaptation means 6.1 of said first stop element 6 for adapting to the surface of the upper crosspiece 2 comprise a planar surface with a prolongation 22 perpendicular thereto at its upper end.

The frame of a table 1 of this second preferred embodiment of the invention is made of aluminum and has a protective cap 25 at the free ends of the crosspieces 2, as shown in Figure 12.

It also comprises a safety element 24 coupled to the upper face of the upper crosspieces 2, as can be seen in Figure 11.

With the connecting device for connecting crosspieces of the frame of a table and the frame of a table with said device herein disclosed, significant improvements are achieved with respect to the state of the art both from the crosspiece maintenance viewpoint and from the most effective fixing viewpoint.

Crosspiece maintenance is therefore substantially improved because these connections herein proposed protect the crosspieces right where the connection is made, thereby preventing possible deformations thereof since pressure is not applied on the crosspieces but rather on the connecting elements.

Furthermore, these connecting elements ensure that the fixing pressure applied is the suitable fixing pressure as it is applied on the connecting elements and not on the crosspieces directly, whereby making the connections effective, preventing such connections from being too loose and coming off or too strong and creating deformations at the points of connection.

Furthermore, another very significant advantage of this connecting device is that it is also valid for upper and central crosspieces having circular, square or rectangular sections and for any material thereof, particularly aluminum, which was a problematic material in the state of the art but now with this device it presents no problems.

## Claims

1. Table with a tabletop (13) and with a frame comprising at least four legs (10), at least four upper crosspieces (2) connecting contiguous legs (10), each of them having a first hole (11) at an intermediate point and a second hole (12) at the ends thereof, a fixing system for fixing same, also formed by at least one central crosspiece (3), having a third hole at the point of connection with the upper crosspieces (2), wherein said frame also comprises a connecting device for connecting crosspieces, said connecting device comprising:
- a fixing bolt element (4) for fixing each upper crosspiece (2) and the at least one corresponding central crosspiece (3), the resulting fixing points located in the first hole (11) of each upper crosspiece (2) being a pivot point the axis of which coincides with the fixing bolt element (4);
- where this fixing bolt element (4) is a longitudinal element with a first end (4.1) and a second end (4.2), having a first stop element (6) abutting with the surface of the upper crosspiece (2) at the first end (4.1) of the bolt element (4), , **characterised in that** the fixing bolt element (9) has a second stop element (8) between the upper crosspiece (2) and the central crosspiece (3), and clamping means (9);
and, **in that** the connecting device furthers comprises:
- an angle bracket (5) for connecting adjacent upper crosspieces (2) at the point where they come together, formed by two orthogonal sides (16) each having a longitudinal through hole (17); and
- respective connecting elements (20) for connecting each angle bracket (5) with the corresponding upper crosspieces (2) in the second hole (12) of these, comprising a third stop element (21) between each upper crosspiece (2) and the angle bracket (5), and clamping means (9).

2. Table according to claim 1, **characterized in that** the fixing bolt element (4) and the first stop element (6) are independent parts.

3. Table according to claim 1, **characterized in that** the first stop element (6) is integrally connected to the first end (4.1) of the fixing bolt element (4).

4. Table according to claim 2, **characterized in that** the fixing bolt element (4) comprises a reinforcement element (14) for reinforcing the connection of the fixing bolt element (4) and the upper crosspiece (2), having a hollow cylindrical section with a first end (14.1) and a second end (14.2), having an outer diameter equal to or less than the diameter of the first hole (11) of the upper crosspiece (2) and an inner diameter equal to or greater than the diameter of the bolt element (4), and comprising a flange (15) around the perimeter of the first end (14.1).

5. Table according to any of the preceding claims, **characterized in that** the fixing bolt element (4) comprises an outer thread (7.1) at the second end (4.2) thereof.

6. Table according to claims 4 and 5, **characterized in that** the reinforcement element (14) comprises a thread on the inner surface of the second end (14.2) of the hollow cylindrical section.

7. Table according to any of the preceding claims, **characterized in that** the face of the first stop element (6) contacting with the upper crosspiece (2) comprises adaptation means (6.1) for adapting to the outer surface thereof.

8. Table according to any of the preceding claims, **characterized in that** the second stop element (8) comprises a first face with first adaptation means (8.1) for adapting to the outer surface of the upper crosspiece (2) and a second face opposite the first face having second adaptation means (8.2) for adapting to the outer surface of the central crosspiece (3).

9. Table according to any of the preceding claims, **characterized in that** the angle bracket (5) for connecting adjacent upper crosspieces (2) comprises an intermediate face (18) between the two sides (16) of the right angle, orthogonal to the bisecting line thereof, such that the bracket comprises two obtuse angles (19) each formed by one of the sides (16) and the intermediate face (18), respectively.

10. Table according to claim 9, **characterized in that** the connecting elements (20) for connecting the angle bracket (5) and the upper crosspieces (2) comprise a first end (20.1) having an outer diameter equal to or less than the diameter of the second hole (12) of the upper crosspieces (2) and a second end (20.2) with an outer thread (7.2).

11. Table according to claim 10, **characterized in that** the outer surface of the first end (20.1) of the connecting elements (20) for connecting the angle bracket (5) and the upper crosspieces (2) comprises a thread (7.3).

12. Table according to claim 10, **characterized in that** the outer surface of the first end (20.1) of the connecting elements (20) for connecting the angle bracket (5) and the upper crosspieces (2) is smooth and comprises a fourth stop element (26).

13. Table according to any of claims 1 to 12, **characterized in that** the upper crosspieces (2) of the table (1) have a circular section.

14. Table according to any of claims 1 to 12, **characterized in that** the upper crosspieces (2) have a square or rectangular section.

15. Table according to any of claims 13 and 14, **characterized in that** the at least one central crosspiece (3) has a circular section.

16. Table according to any of claims 13 and 14, **characterized in that** the at least one central crosspiece (3) has a square or rectangular section.

17. Table according to claims 7, 14 and any of claims 15 to 16, **characterized in that** when the first stop element (6) is integrally connected to the first end (4.1) of the fixing bolt element (4), the adaptation means (6.1) for adapting said first stop element (6) to the outer surface of the upper crosspiece (2) comprise a planar surface with a prolongation (22) perpendicular thereto, in at least one of its upper or lower ends.

18. Table according to claims 4, 13 and any of claims 15 to 16, **characterized in that** the flange (15) of the reinforcement element (14) for reinforcing the connection of the fixing bolt element (4) and the upper crosspiece (2) is housed in the inner surface of the second stop element (8).

## Patentansprüche

1. Tisch mit einer Tischplatte (13) und einem Rahmen, aufweisend mindestens vier Beine (10), mindestens vier Holme (2), die benachbarte Tischbeine (10) verbinden und von denen jeder ein erstes Loch (11) an einem mittleren Punkt und ein zweites Loch (12) an den Enden davon hat, ein Befestigungssystem zum Befestigen desselben, das auch durch mindestens einen zentralen Holm (3) gebildet ist, mit einem dritten Loch an dem Verbindungspunkt mit dem oberen Holm (2), wobei der Rahmen auch eine Verbindungsvorrichtung zum Verbinden der Holme aufweist, wobei die Verbindungsvorrichtung aufweist:
- ein Befestigungsbolzenelement (4) zum Befestigen jedes oberen Holms (2) und des mindestens einen entsprechenden zentralen Holms (3), wobei die resultierenden Befestigungspunkte in dem ersten Loch (11) von jedem oberen Holm (2) ein Drehpunkt sind, dessen Achse mit dem Befestigungselement (4) übereinstimmt;
- wobei das Befestigungsbolzenelement (4) ein Längselement mit einem ersten Ende (4.1) und einem zweiten Ende (4.2) ist, das ein erstes Stoppelement (6) aufweist, das an die Oberfläche des oberen Holms (2) angrenzt, an dem ersten Ende (4.1) des Bolzenelements (4),
**dadurch gekennzeichnet, dass** das Befestigungsbolzenelement (9) ein zweites Stoppelement (8) zwischen dem oberen Holm (2) und dem zentralen Holm (3) und ein Befestigungsmittel (9) aufweist; und dass die Verbindungsvorrichtung ferner aufweist:
eine Winkelhalterung (5) zum Verbinden von benachbarten oberen Holmen (2) an dem Punkt, an dem sie zusammentreffen, gebildet durch zwei senkrechtstehende Seiten (16), von denen jede ein längliches Durchgangsloch (17) hat; und
entsprechende Verbindungselemente (20) zum Verbinden jeder Winkelhalterung (5) mit dem entsprechenden oberen Holm (2) in dem zweiten Loch (12) davon, aufweisend ein drittes Stoppelement (21) zwischen jedem oberen Holm (2) und der Winkelhalterung (5), und Befestigungsmittel (9).

2. Tisch nach Anspruch 1, **dadurch gekennzeichnet, dass** das Befestigungsbolzenelement (4) und das erste Stoppelement (6) unabhängige Teile sind.

3. Tisch nach Anspruch 1, **dadurch gekennzeichnet, dass** das erste Stoppelement (6) einstückig mit dem ersten Ende (4.1) des Befestigungsbolzenelements (4) verbunden ist.

4. Tisch nach Anspruch 2, **dadurch gekennzeichnet, dass** das Befestigungsbolzenelement (4) ein Verstärkungselement (14) zum Verstärken der Verbindung des Befestigungsbolzenelements (4) und des oberen Holm (2) aufweist, mit einem hohlen zylindrischen Abschnitt mit einem ersten Ende (14.1) und einem zweiten Ende (14.2), mit einem äußeren Durchmesser gleich oder kleiner als der Durchmesser des ersten Lochs (11) des oberen Holms (2) und einem inneren Durchmesser gleich oder größer als der Durchmesser des Bolzenelements (4), aufweisend einen Flansch (15) um den Umfang des ersten Endes (14.1) herum.

5. Tisch nach einem der vorhergehenden Ansprüche, **dadurch gekennzeichnet, dass** das Befestigungsbolzenelement (4) (4.2) ein Außengewinde (7.1) an seinem zweiten Ende aufweist.

6. Tisch nach Anspruch 4 oder 5, **dadurch gekennzeichnet, dass** das Verstärkungselement (14) ein Gewinde an der Innenfläche des zweiten Endes (14.2) des hohlen zylindrischen Abschnitts aufweist.

7. Tisch nach einem der vorhergehenden Ansprüche, **dadurch gekennzeichnet, dass** die Fläche des ersten Stoppelements (6), das mit dem oberen Holm (2) in Kontakt steht, ein Anpassungsmittel (6.1) zum Anpassen an die Außenfläche davon aufweist.

8. Tisch nach einem der vorhergehenden Ansprüche, **dadurch gekennzeichnet, dass** das zweite Stoppelement (8) eine erste Fläche mit einem ersten Anpassungsmittel (8.1) zum Anpassen an die Außenfläche des oberen Holms (2) und eine zweite Fläche gegenüber der ersten Fläche mit einem zweiten Anpassungsmittel (8.2) zum Anpassen an die Außenfläche des zentralen Holms (3) aufweist.

9. Tisch nach einem der vorhergehenden Ansprüche, **dadurch gekennzeichnet, dass** die Winkelhalterung (5) zum Verbinden von benachbarten oberen Holmen (2) eine mittlere Fläche (18) zwischen den zwei Seiten (16) des rechten Winkels, senkrecht zu der Winkelhalbierenden davon, aufweist, so dass die Halterung zwei stumpfe Winkel (19), jeder gebildet jeweils durch eine der Seiten (16) und der mittleren Fläche (18), aufweist.

10. Tisch nach Anspruch 9, **dadurch gekennzeichnet**, das die Verbindungselemente (20) zum Verbinden der Winkelhalterung (5) und der oberen Holme (2) ein erstes Ende (20.1) mit einem Außendurchmesser gleich oder kleiner als der Durchmesser des zweiten Lochs (12) des oberen Holms (2) und ein zweites Ende (20.2) mit einem Außengewinde (7.2) aufweisen.

11. Tisch nach Anspruch 10, **dadurch gekennzeichnet, dass** die Außenfläche (20.1) des Verbindungselements (20) zum Verbinden der Winkelhalterung (5) und des oberen Holms (2) ein Gewinde (7.3) aufweist.

12. Tisch nach Anspruch 10, **dadurch gekennzeichnet, dass** die Außenfläche des ersten Endes (20.1) der Verbindungselemente (20) zum Verbinden der Winkelhalterung (5) und des oberen Holms (2) glatt ist und ein viertes Stoppelement (26) aufweist.

13. Tisch nach einem der Ansprüche 1 bis 12, **dadurch gekennzeichnet, dass** der obere Holm (2) des Tischs (1) ein kreisförmiges Profil hat.

14. Tisch nach einem der Ansprüche 1 bis 12, **dadurch gekennzeichnet, dass** der obere Holm (2) ein quadratisches oder rechteckiges Profil hat.

15. Tisch nach einem der Ansprüche 13 und 14, **dadurch gekennzeichnet, dass** der mindestens eine zentrale Holm (3) ein kreisförmiges Profil hat.

16. Tisch nach einem der Ansprüche 13 und 14, **dadurch gekennzeichnet, dass** der mindestens eine zentrale Holm (3) ein quadratisches oder rechteckiges Profil hat.

17. Tisch nach den Ansprüchen 7, 14 und einem der Ansprüche 15 bis 16, **dadurch gekennzeichnet, dass** wenn das erste Stoppelement (6) einstückig mit dem ersten Ende (4.1) des Befestigungsbolzenelements (4) verbunden ist, das Adaptierungsmittel (6.1) zum Adaptieren des ersten Stoppelements (6) an die Außenfläche des oberen Holms (2) eine plane Fläche mit einer Verlängerung (22) senkrecht dazu aufweist, an mindestens einem von dem oberen oder unteren Ende davon.

18. Tisch nach den Ansprüchen 4, 13 und einem der Ansprüche 15 bis 16, **dadurch gekennzeichnet, dass** der Flansch (15) des Verstärkungselements (14) zum Verstärken der Verbindung des Befestigungsbolzenelements (4) und des obere Holm (2) in der Innenfläche des zweiten Stoppelements (8) untergebracht ist.

## Revendications

1. Table dotée d'un dessus de table (13) et d'un châssis comprenant au moins quatre pieds (10), au moins quatre traverses supérieures (2) reliant des pieds (10) contigus, chacune d'elles ayant un premier trou (11) au niveau d'un point intermédiaire et un deuxième trou (12) au niveau de ses extrémités, un système de fixation pour les fixer, également formé par au moins une traverse centrale (3), ayant un troisième trou au niveau du point de liaison avec les traverses supérieures (2), dans laquelle ledit châssis comprend également un dispositif de liaison pour relier les traverses, ledit dispositif de liaison comprenant :
- un élément de boulon de fixation (4) pour fixer chaque traverse supérieure (2) et l'au moins une traverse centrale (3) correspondante, les points de fixation résultants situés dans le premier trou (11) de chaque traverse supérieure (2) étant un point de pivotement dont l'axe coïncide avec l'élément de boulon de fixation (4) ;
- où cet élément de boulon de fixation (4) est un élément longitudinal avec une première extrémité (4.1) et une seconde extrémité (4.2), ayant un premier élément de butée (6) butant contre la surface de la traverse supérieure (2) au niveau de la première extrémité (4.1) de l'élément de boulon (4), **caractérisée en ce que** l'élément de boulon de fixation (9) comporte un deuxième élément de butée (8) entre la traverse supérieure (2) et la traverse centrale (3), et un moyen de serrage (9) ; et **en ce que** le dispositif de liaison comprend en outre :
- une équerre d'angle (5) pour relier des traverses supérieures (2) adjacentes au niveau du point où elles se joignent, formée par deux côtés orthogonaux (16) ayant chacun un trou traversant longitudinal (17) ; et
- des éléments de liaison (20) respectifs pour relier chaque équerre d'angle (5) aux traverses supérieures (2) correspondantes dans le deuxième trou (12) de celles-ci, comprenant un troisième élément de butée (21) entre chaque traverse supérieure (2) et l'équerre d'angle (5), et un moyen de serrage (9).

2. Table selon la revendication 1, **caractérisée en ce que** l'élément de boulon de fixation (4) et le premier élément de butée (6) sont des pièces indépendantes.

3. Table selon la revendication 1, **caractérisée en ce que** le premier élément de butée (6) est relié d'un seul tenant à la première extrémité (4.1) de l'élément de boulon de fixation (4).

4. Table selon la revendication 2, **caractérisée en ce que** l'élément de boulon de fixation (4) comprend un élément de renforcement (14) pour renforcer la liaison de l'élément de boulon de fixation (4) et la traverse supérieure (2), ayant une section cylindrique creuse avec une première extrémité (14.1) et une seconde extrémité (14.2), ayant un diamètre extérieur inférieur ou égal au diamètre du premier trou (11) de la traverse supérieure (2) et un diamètre intérieur supérieur ou égal au diamètre de l'élément de boulon (4), et comprenant une bride (15) autour du périmètre de la première extrémité (14.1).

5. Table selon l'une quelconque des revendications précédentes, **caractérisée en ce que** l'élément de boulon de fixation (4) comprend un filet extérieur (7.1) au niveau de sa seconde extrémité (4.2).

6. Table selon les revendications 4 et 5, **caractérisée en ce que** l'élément de renforcement (14) comprend un filet sur la surface intérieure de la seconde extrémité (14.2) de la section cylindrique creuse.

7. Table selon l'une quelconque des revendications précédentes, **caractérisée en ce que** la face du premier élément de butée (6) entrant en contact avec la traverse supérieure (2) comprend un moyen d'adaptation (6.1) pour s'adapter à la surface extérieure.

8. Table selon l'une quelconque des revendications précédentes, **caractérisée en ce que** le deuxième élément de butée (8) comprend une première face avec un premier moyen d'adaptation (8.1) pour s'adapter à la surface extérieure de la traverse supérieure (2) et une seconde face opposée à la première face ayant un second moyen d'adaptation (8.2) pour s'adapter à la surface extérieure de la traverse centrale (3).

9. Table selon l'une quelconque des revendications précédentes, **caractérisée en ce que** l'équerre d'angle (5) pour relier des traverses supérieures (2) adjacentes comprend une face intermédiaire (18) entre les deux côtés (16) de l'angle droit, orthogonale à sa ligne bissectrice, de sorte que l'équerre comprenne deux angles obtus (19) formés chacun par l'un des côtés (16) et la face intermédiaire (18), respectivement.

10. Table selon la revendication 9, **caractérisée en ce que** les éléments de liaison (20) pour relier l'équerre d'angle (5) et les traverses supérieures (2) comprennent une première extrémité (20.1) ayant un diamètre extérieur inférieur ou égal au diamètre du deuxième trou (12) des traverses supérieures (2) et une seconde extrémité (20.2) avec un filet extérieur (7.2).

11. Table selon la revendication 10, **caractérisée en ce que** la surface extérieure de la première extrémité (20.1) des éléments de liaison (20) pour relier l'équerre d'angle (5) et les traverses supérieures (2) comprend un filet (7.3).

12. Table selon la revendication 10, **caractérisée en ce que** la surface extérieure de la première extrémité (20.1) des éléments de liaison (20) pour relier l'équerre d'angle (5) et les traverses supérieures (2) est lisse et comprend un quatrième élément de butée (26).

13. Table selon l'une quelconque des revendications 1 à 12, **caractérisée en ce que** les traverses supérieures (2) de la table (1) ont une section circulaire.

14. Table selon l'une quelconque des revendications 1 à 12, **caractérisée en ce que** les traverses supérieures (2) ont une section carrée ou rectangulaire.

15. Table selon l'une quelconque des revendications 13 et 14, **caractérisée en ce que** au moins une des traverses centrales (3) a une section circulaire.

16. Table selon l'une quelconque des revendications 13 et 14, **caractérisée en ce que** au moins une des traverses centrales (3) a une section carrée ou rectangulaire.

17. Table selon les revendications 7, 14 et l'une quelconque des revendications 15 à 16, **caractérisée en ce que**, lorsque le premier élément de butée (6) est relié d'un seul tenant à la première extrémité (4.1) de l'élément de boulon de fixation (4), le moyen d'adaptation (6.1) pour adapter ledit premier élément de butée (6) à la surface extérieure de la traverse supérieure (2) comprend une surface plane avec un prolongement (22) perpendiculaire à celle-ci, dans au moins l'une de ses extrémités supérieures ou inférieures.

18. Table selon les revendications 4, 13 et l'une quelconque des revendications 15 à 16, **caractérisée en ce que** la bride (15) de l'élément de renforcement (14) pour renforcer la liaison de l'élément de boulon de fixation (4) et la traverse supérieure (2) est logée dans la surface intérieure du deuxième élément de butée (8).
